# EUROPÄISCHE PATENTSCHRIFT

(11) **EP 0 478 903 B1**
(45) Veröffentlichungstag und Bekanntmachung des Hinweises auf die Patenterteilung: **28.12.1994**
(21) Anmeldenummer: 91111103.7
(22) Anmeldetag: 04.07.1991
(51) Int. Cl.: B41F 13/00, B41F 17/02, B23Q 1/28, B23D 35/00

(54) **Wechselkassettenvorrichtung für eine Rollenrotationsdruckmaschine**
Device for changing cassettes for a web-fed rotary press
Dispositif de changement de cassettes pour une presse rotative à bobines

(30) Priorität: 29.09.1990 DE 4030864
(43) Veröffentlichungstag der Anmeldung: 08.04.1992
(73) Patentinhaber: MAN Roland Druckmaschinen AG, 63012 Offenbach (DE)
(72) Erfinder: Rau, Gunnar, W-8901 Königsbrunn (DE); Heller, Albert, W-8911 Pestenacker (DE)

(56) Entgegenhaltungen:
- EP-A- 0 264 347
- DE-C- 1 111 906
- FR-A- 2 257 397
- FR-A- 2 276 179
- US-A- 1 666 431
- US-A- 3 192 600

## Beschreibung

Die vorliegende Erfindung betrifft eine Wechselkassettenvorrichtung für eine Rollenrotationsdruckmaschine und insbesondere eine derartige Wechselkassettenvorrichtung für die von der Anmelderin der vorliegenden Anmeldung unter dem Aktenzeichen DE-P 40 30 863.4-27 angemeldete Rollenrotationsdruckmaschine mit einer vorzugsweise für Bücher- und Kalenderdruck ausgelegten Falzvorrichtung.

Die Verwendung von Wechselwerkzeugen, wie zum Beispiel Bohr-, Schneid- oder Stanzwerkzeugen, in Arbeitsmaschinen, die für die Herstellung einer Vielfalt von Produktvarianten vorgesehen sind und bei denen die Umstellung von einem Produkt auf ein anderes schnell und ohne wesentliche Einstellarbeiten erfolgen soll, ist an sich bekannt. Bekannt ist auch die unter dem Begriff "Einschubtechnik" zusammenzufassende Ausbildung von Baugruppen zwecks vereinfachten Austauschs im Wartungs- oder Reparaturfall. (Siehe z.B. EP-A-0264347). Ein für jede Werkzeug- bzw. Einschubart gesondert zu lösendes Problem stellt dabei die Befestigung des Werkzeugs im Werkzeughalter bzw. des Einschubs im Gestell dar.

Aufgabe der vorliegenden Erfindung ist es daher, eine Wechselkassettenvorrichtung für eine Rollenrotationsdruckmaschine so auszubilden, daß ein Wechsel der Kassette vereinfacht wird, daß die Rüst- bzw. Umrüstzeiten deutlich verkürzt werden und daß die Wechselkassette unabhängig vom Betriebszustand der Druckmaschine, also auch bei laufender Druckmaschine, stets in eine eindeutige, exakte Position bringbar und stets in dieser haltbar ist.

Diese Aufgabe wird durch eine Wechselkassettenvorrichtung mit den Merkmalen des Patentanspruchs 1 gelöst. Vorteilhafte Weiterbildungen der Erfindung sind Gegenstand von Unteransprüchen.

Weitere Merkmale und Zweckmäßigkeiten der Erfindung ergeben sich aus der Beschreibung eines Ausführungsbeispiels anhand der Figuren. Von den Figuren zeigen:
- Fig. 1: in vereinfachter Darstellung eine Frontansicht einer Wechselkassettenvorrichtung in einer erfindungsgemäßen Ausführungsform und
- Fig. 2: in vereinfachter Darstellung eine Draufsicht der Vorrichtung von Figur 1.

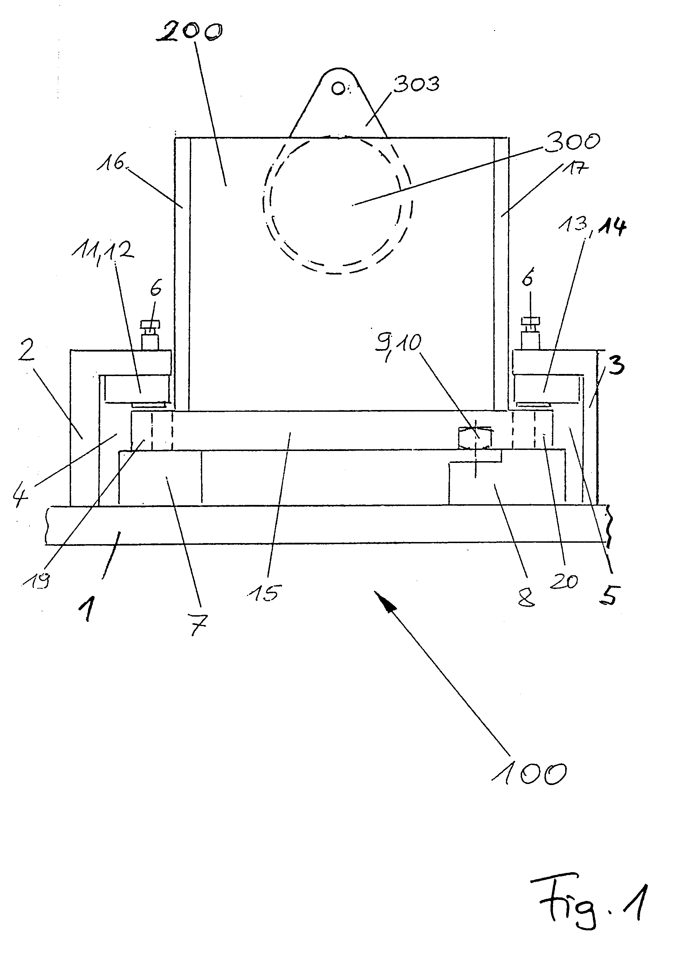

Figur 1 zeigt in einer vereinfachten Frontansicht eine Wechselkassettenvorrichtung 100, die ein Gestell 1, auf dem zwei Halteschienen 2 und 3 mit winkelförmigem Querschnitt in einem Abstand voneinander und zueinander parallel und spiegelsymmetrisch derart befestigt sind, daß sie mit dem Gestell 1 zusammen jeweils einen U-förmigen Kanal 4 bzw. 5 bilden, aufweist. Zwischen den Halteschienen 2 und 3 sind zwei Laufschienen 7 und 8 am Gestell 1 befestigt. Die Laufschienen 7 und 8 verlaufen im wesentlichen parallel zu den Halteschienen 2 und 3. Die Laufschiene 8 ist breiter ausgebildet als die Laufschiene 7 und trägt zwei Führungsrollen 9 und 10 mit zur Oberfläche des Gestells 1 senkrechten Achsen. Weiterhin weist die Wechselkassettenvorrichtung 100 vier Klemmvorrichtungen auf, die im vorliegenden Ausführungsbeispiel als hydraulisch betätigbare Klemmzylinder 11 bis 14 ausgeführt sind. Es können jedoch auch pneumatisch betätigbare Klemmzylinder oder elektromagnetische Klemmvorrichtungen vorgesehen werden. Je zwei der Klemmzylinder 11 bis 14 sind an den zum Gestell 1 parallel verlaufenden Schenkeln der Halteschienen 2 und 3 angeordnet.

Zusätzlich zu den Klemmvorrichtungen 11 bis 14 ist an jedem der zum Gestell 1 parallelen Schenkel der Halteschienen 2 und 3 ein als Schraube 6 mit Kontermutter ausgebildeter Niedenhalter angeordnet, dessen Funktion weiter unten erläutert wird.

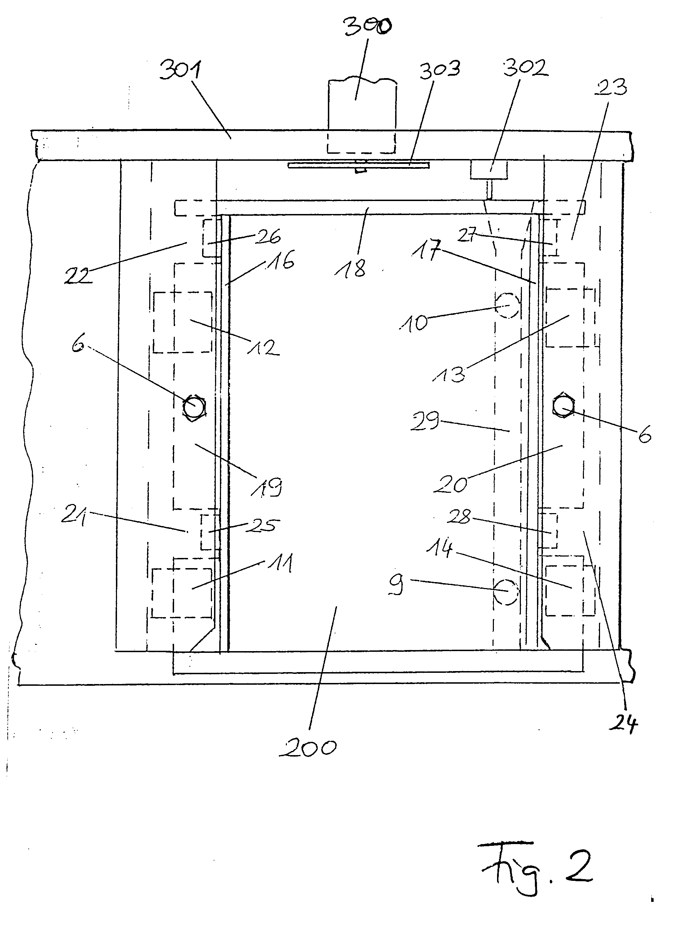

Weiterhin zeigt Figur 1 eine in die Wechselkassettenvorrichtung 100 eingesetzte Wechselkassette 200. Die Wechselkassette 200 ist als ein im wesentlichen quaderförmiger Körper mit einem Boden 15, zwei Seitenwänden 16 und 17 und einer Rückwand 18 (siehe Figur 2) ausgebildet und weist an seiner Unterseite zwei den Boden 15 über die Seitenwände 16 und 17 hinaus verlängernde Ausleger 19 und 20 auf.

Figur 2 zeigt die Wechselkassettenvorrichtung 100 mit einer eingesetzten Wechselkassette 200 in einer schematischen Draufsicht. Zu sehen sind außer der Anordnung der Führungsrollen 9 und 10 und der Klemmzylinder 11 bis 14 eine Anschlußwand 301, die auf dem Gestell 1 senkrecht angeordnet ist und an der ein Antrieb 300 zum Antreiben des in der Wechselkassette 200 enthaltenen Werkzeugs befestigt ist.

Weiterhin ist in Figur 2 dargestellt, daß die Ausleger 19 und 20 jeweils zwei Ausnehmungen 21 und 22 bzw. 23 und 24 aufweisen. In diesen Ausnehmungen 21 bis 24 sind in den Seitenwänden 16 und 17 insgesamt vier Laufrollen 25 bis 28 mit zum Boden 15 parallel angeordneten Achsen drehbar angebracht. Ferner weist die Wechselkassette 200 an ihrem Boden 15 eine zum Ausleger 20 parallel verlaufende Nut 29 zur Aufnahme der Führungsrollen 9 und 10 auf. Die Nut 29 läuft zur Vereinfachung des Einsetzens der Wechselkassette 200 in die Wechselkassettenvorrichtung 100 zur Rückwand 18 hin trichterförmig aus.

Wird nun eine Wechselkassette 200 in die Wechselkassettenvorrichtung 100 eingesetzt, so wird sie zunächst mit den hinteren Laufrollen 26 und 27 auf die Laufschienen 7 und 8 aufgesetzt und nach hinten geschoben. Dabei läuft zuerst die Führungsrolle 9 und dann die Führungsrolle 10 so in die Nut 29 ein, daß die Wechselkassette 200 auf den Antrieb 300 ausgerichtet wird und in diesen einrastet. Der Antrieb 300 wird in an sich bekannter Weise mittels eines Endschalters 302, der beispielsweise in der Anschlußwand 301 angeordnet ist, und mittels eines durch eine an der Anschlußwand 301 schwenkbar gelagerte Abdeckklappe 303 betätigten (nicht dargestellten) Schalters freigeschaltet bzw. gesperrt.

Ist die Wechselkassette 200 in den Antrieb 300 eingerastet, so wird sie, soweit erforderlich, durch Verschieben entlang der Halteschienen 2 und 3 hinsichtlich des Seitenregisters ausgerichtet. Dann werden die Klemmzylinder 11 bis 14 aktiviert, um so die Wechselkassette 200 auf dem Gestell 1 festzuklemmen. Zum Ändern der Einstellung des Seitenregisters sowie zum Herausnehmen der Kassette werden zunächst die Klemmzylinder deaktiviert. Die Reaktivierung der Klemmzylinder nach erfolgter Einstellung des Seitenregisters und nach Einsetzen einer Kassette erfolgt vorzugsweise automatisch durch eine zeitgesteuerte Vorrichtung, um dem Bediener den Kassettenwechsel und die Einstellarbeit weitestmöglich zu vereinfachen und um sicherzustellen, daß eine Kassette nur dann betrieben wird, wenn sie am Gestell 1 sicher befestigt ist.

Für die Zeit, während der die Klemmzylinder 11 bis 14 deaktiviert, d.h. gelöst sind, übernehmen die Schrauben 6 das Halten der Wechselkassette 200. Die Schrauben 6 sind zu diesem Zweck so eingestellt, daß die Wechselkassette 200 beim Verschieben entlang der Laufschienen 7 und 8 spiel frei geführt wird. Dadurch ist sichergestellt, daß die Wechselkassette 200 beim Verstellen des Seitenregisters bei laufender Druckmaschine, also wenn die Klemmwirkung der Klemmzylinder 11 bis 14 nicht gegeben ist, nicht anfängt zu vibrieren. Denn ein Vibrieren der Kassette hätte eine Beschädigung des Antriebs 300, und insbesondere dessen Kupplung, zur Folge.

Die vorstehend beschriebene Wechselkassettenvorrichtung kann mehrfach nebeneinander angeordnet werden und erlaubt so eine Aufeinanderfolge verschiedener Bearbeitungsschritte bei gleichzeitig kürzestmöglichem Transportweg zwischen den aufeinander folgenden Bearbeitungsstationen.

## Patentansprüche

1. Wechselkassettenvorrichtung (100) für eine Rollenrotationsdruckmaschine mit einem Gestell (1), auf dem zwei Halteschienen (2, 3) mit winkelförmigem Querschnitt in einem Abstand voneinander und zueinander parallel und spiegelsymmetrisch derart befestigt sind, daß sie mit dem Gestell (1) zusammen jeweils einen U-förmigen Kanal (4, 5) bilden,
dadurch gekennzeichnet, daß die Wechselkassettenvorrichtung (100) wenigstens zwei Klemmzylinder (11-14) aufweist, von denen an jeder Halteschiene (2, 3) wenigstens ein Klemmzylinder (11, 14) angebracht ist, und daß eine in die Wechselkassettenvorrichtung (100) eingesetzte Wechselkassette (200) bei zur Einstellung des Seitenregisters gelösten Klemmzylindern (11, 14) mittels eines an jeder Halteschiene (2, 3) angeordneten Niederhalters spielfrei führbar ist.

2. Wechselkassettenvorrichtung (100) nach Anspruch 1, dadurch gekennzeichnet, daß die Klemmzylinder (11-14) hydraulisch betätigbar sind.

3. Wechselkassettenvorrichtung (100) nach Anspruch 1, dadurch gekennzeichnet, daß die Klemmzylinder (11-14) pneumatisch betätigbar sind.

4. Wechselkassettenvorrichtung (100) nach Anspruch 1, dadurch gekennzeichnet, daß die Klemmzylinder (11-14) elektromagnetisch betätigbar sind.

5. Wechselkassettenvorrichtung (100) nach einem der Ansprüche 1 bis 4, dadurch gekennzeichnet, daß auf dem Gestell (1) zwei zwischen den Halteschienen (2, 3) und zu diesen im wesentlichen parallel verlaufende Laufschienen (7, 8) angebracht sind, von denen eine zwei Führungsrollen (9, 10) mit zum Gestell (1) senkrechten Achsen aufweist.

6. Wechselkassettenvorrichtung (100) nach einem der Ansprüche 1 bis 5, dadurch gekennzeichnet, daß die Niederhalter als Schrauben (6) mit Kontermutter ausgebildet sind.

7. Wechselkassette (200) zum Einschieben in eine Wechselkassettenvorrichtung (100) nach einem der Ansprüche 1 bis 6, dadurch gekennzeichnet, daß die Wechselkassette (200) als im wesentlichen quaderförmiger Körper mit einem Boden (15), zwei Seitenwänden (16, 17) und einer Rückwand (18) ausgebildet ist und an ihrer Unterseite zwei den Boden (15) über die Seitenwände (16, 17) hinaus verlängernde Ausleger (19, 20) aufweist, an denen die Klemmzylinder (11-14) beim Festklemmen der Wechselkassette (200) angreifen und über denen (19, 20) die Niederhalter in einem derartigen Abstand positioniert sind, daß eine spielfreie Führung der Wechselkassette (200) gewährleistet ist.

## Claims

1. Cassette-changing device (100) for a web-fed rotary printing machine having a frame (1) on which two retaining rails (2, 3) of angular cross-section are secured at a distance from each other, parallel to each other and mirror-symmetrical, in such a way that together with the frame (1) they each form a U-shaped channel (4, 5),
characterised in that the cassette-changing device (100) has at least two clamping cylinders (11, 14) of which at least one clamping cylinder (11, 14) is fitted on each retaining rail (2, 3), and in that a replacement cassette (200) inserted into the cassette-changing device (100) can be guided without play by means of a holding-down device arranged on each retaining rail (2, 3) with the clamping cylinders (11, 14) released for setting the side register.

2. Cassette-changing device (100) according to claim 1, characterised in that the clamping cylinders (11-14) can be hydraulically actuated.

3. Cassette-changing device (100) according to claim 1, characterised in that the clamping cylinders (11-14) can be pneumatically actuated.

4. Cassette-changing device (100) according to claim 1, characterised in that the clamping cylinders (11-14) can be electromagnetically actuated.

5. Cassette-changing device (100) according to one of claims 1 to 4, characterised in that on the frame (1) two slide rails (7, 8) are fitted, extending between the retaining rails (2, 3) and substantially parallel to them, one of which has two guide rollers (9, 10) with axes perpendicular to the frame (1).

6. Cassette-changing device (100) according to one of claims 1 to 5, characterised in that the holding-down devices are constructed as screws (6) with counter nuts.

7. Replacement cassette (200) for inserting into a cassette-changing device (100) according to one of claims 1 to 6, characterised in that the replacement cassette (200) is constructed as a substantially square body having a base (15), two side walls (16, 17) and a rear wall (18), and has on its lower side two extension arms (19, 20) extending the base (15) beyond the side walls (16, 17) on which the clamping cylinders (11-14) engage during clamping of the replacement cassette (200) and over which (19, 20) the holding-down devices are positioned at such a distance that play-free guiding of the replacement cassette (200) is guaranteed.

## Revendications

1. Dispositif (100) à magasin interchangeable pour une presse rotative à imprimer comportant un châssis (1), sur lequel deux rails de retenue (2,3) possédant une section transversale en forme d'équerre sont fixés parallèlement et à distance l'un de l'autre et de façon symétrique de telle sorte qu'ils forment, conjointement avec le châssis (1), respectivement un canal en forme de U (4,5),
caractérisé en ce que le dispositif (100) à magasin interchangeable comporte au moins deux vérins de serrage (11-14), dont l'un au moins (11,14) est monté sur chaque rail de retenue (2,3), et que lorsque les vérins de serrage (11,14) sont desserrés pour le réglage de l'alignement latéral, un magasin interchangeable (200), inséré dans le dispositif (100) à magasin interchangeable peut être guidé sans jeu au moyen d'un dispositif de retenue disposé sur chaque rail de retenue (2,3).

2. Dispositif (100) d'un magasin interchangeable selon la revendication 1, caractérisé en ce que les vérins de serrage (11,14) peuvent être actionnés hydrauliquement.

3. Dispositif (100) d'un magasin interchangeable selon la revendication 1, caractérisé en ce que les vérins de serrage (11-14) peuvent être actionnés pneumatiquement.

4. Dispositif (100) à magasin interchangeable selon la revendication 1, caractérisé en ce que les vérins de serrage (11-14) peuvent être actionnés par voie électromagnétique.

5. Dispositif (100) d'un magasin interchangeable selon l'une des revendications 1 à 4, caractérisé en ce que sur le châssis (1) sont disposés deux rails de roulement (7,8), qui sont situés entre les rails de retenue (2,3) et s'étendent sensiblement parallèlement à ces derniers et dont l'un comporte deux galets de guidage (9,10) possédant des axes perpendiculaires au châssis (1).

6. Dispositif (100) à magasin interchangeable selon l'une des revendications 1 à 5, caractérisé en ce que les dispositifs de retenue sont réalisés sous la forme de vis (6) pourvues d'un contre-écrou.

7. Magasin interchangeable (200) destiné à être inséré dans un dispositif (100) à magasin interchangeable selon l'une des revendications 1 à 6, caractérisé en ce que le magasin interchangeable (200) est réalisé sous la forme d'un corps sensiblement parallélépipédique comportant un fond (15), deux parois latérales (16,17) et une paroi arrière (18) et possède, au niveau de sa face inférieure, deux bras en console (19,20) qui prolongent le fond (15) au-delà des parois latérales (16,17) et auxquels s'appliquent les vérins de serrage (11-14) lors du blocage par serrage du magasin interchangeable (12) et au moyen desquels (19,20) les dispositifs de retenue sont positionnés à une distance telle qu'un guidage sans jeu du magasin interchangeable (200) est garanti.
